(19) Europäisches Patentamt / European Patent Office / Office européen des brevets

(11) **EP 4 353 474 A1**

(12) **EUROPEAN PATENT APPLICATION**
published in accordance with Art. 153(4) EPC

(43) Date of publication:
**17.04.2024 Bulletin 2024/16**

(21) Application number: **22816059.4**

(22) Date of filing: **30.05.2022**

(51) International Patent Classification (IPC):
**B32B 13/12** (2006.01)   **B32B 27/00** (2006.01)
**B32B 27/06** (2006.01)   **B32B 27/30** (2006.01)
**E04G 21/24** (2006.01)   **E04G 21/28** (2006.01)
**E04G 21/30** (2006.01)   **E04B 1/76** (2006.01)
**E04B 1/80** (2006.01)

(52) Cooperative Patent Classification (CPC):
**B32B 13/12; B32B 27/00; B32B 27/06;
B32B 27/30; E04B 1/76; E04B 1/80; E04G 21/24;
E04G 21/28; E04G 21/30**

(86) International application number:
**PCT/JP2022/021967**

(87) International publication number:
**WO 2022/255312 (08.12.2022 Gazette 2022/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.05.2021 JP 2021091850**

(71) Applicant: **Keiwa Incorporated
Tokyo 103-0025 (JP)**

(72) Inventors:
• **YASUNO, Kosuke
Tokyo 103-0025 (JP)**
• **TANI, Satoru
Tokyo 103-0025 (JP)**

(74) Representative: **Dehns
St. Bride's House
10 Salisbury Square
London EC4Y 8JD (GB)**

(54) **STRUCTURE PROTECTION SHEET AND METHOD FOR INSTALLING STRUCTURE PROTECTION SHEET**

(57)    Provided is a structure protection sheet that allows for easy and long-lasting repair of the surface of a roof of a structure and that can successfully reduce the temperature rise of the roofing material in the repaired part. The structure protection sheet is a sheet to be attached to the surface of a roof of a structure and includes, in order, a bonding layer, a polymer-cement hardened layer, and a thermal barrier resin layer.

FIG. 1A

EP 4 353 474 A1

FIG. 1B

## Description

### Technical Field

The present invention relates to structure protection sheets and methods for using structure protection sheets. In particular, the present invention relates to: a structure protection sheet that allows for significant shortening of the work period required to place a protection sheet layer on the surface of a roof of a structure such as a concrete structure, that can protect the structure over a long period of time, and that can reduce the temperature rise of the roof; and a method for using the structure protection sheet.

### Background Art

Structures such as houses and commercial buildings have various kinds of roofs such as slate roofs, metal roofs, Galvalume™ roofs, flat roofs (including roofs called "deck roofs"), and concrete roofs. In case that these roofs deteriorate due to long-term exposure to wind and rain or are damaged by disasters such as hurricanes, the deterioration or damage could cause rain leakage.

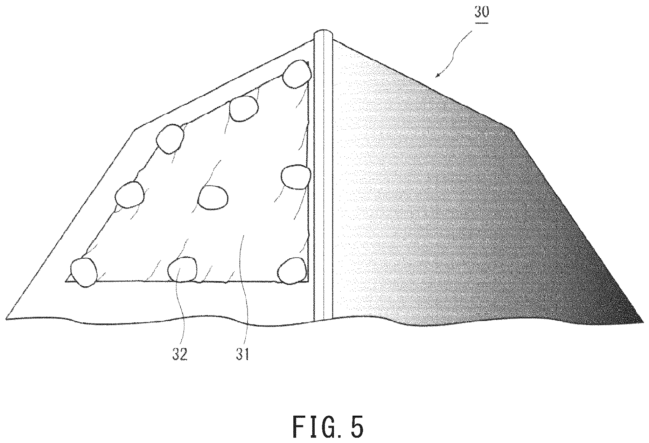

When a roof of a structure has deteriorated or been damaged, a stop-gap measure needs to be taken against the deterioration or damage. An example of common stop-gap measures currently taken against deterioration or damage of roofs of structures is shown in FIG 5. In this example, a blue sheet 31 is placed to cover a damaged part of a roof 30, and sandbags 32 are placed as weights on the blue sheet 31.

Methods other than that in which the blue sheet 31 is placed using the sandbags 32 as weights have also been proposed. For example, Patent Literature 1 or 2 proposes a method in which a blue sheet is fixed by means of bags filled with water.

### Citation List

### Patent Literature

PTL 1: Japanese Utility Model Registration No. 3225057
PTL 2: Japanese Utility Model Registration No. 3116572

### Summary of Invention

### Technical Problem

However, in the conventional roof repair method using the blue sheet 31, it is difficult to prevent wrinkling of the blue sheet 31. Additionally, since the roof surface is usually non-smooth, a gap exists between the blue sheet 31 and the roof, and entry of water through the gap cannot be prevented.

Furthermore, the weathering resistance of the blue sheet is generally not very high, and the blue sheet deteriorates in about a year to such an extent that it becomes necessary to replace the blue sheet with another blue sheet.

A roof of a structure is more exposed to direct sunlight than any other part of the structure. Reducing the direct sunlight-induced temperature rise of the roof leads to a reduction in the temperature rise inside the structure. The ability to reduce the direct sunlight-induced temperature rise of roofs is demanded, especially in geographical areas where the amount of solar radiation is large.

However, the method for repairing a roof of a structure by means of a blue sheet takes no account of the problem of the temperature rise of the roof and has the disadvantage of being unable to address the direct sunlight-induced temperature rise.

The present invention has been made to solve the problems as described above, and an object of the present invention is to provide: a structure protection sheet that allows for easy and long-lasting repair of the surface of a roof of a structure and that can successfully reduce the temperature rise of the roofing material in the repaired part; and a method for using the structure protection sheet.

### Solution to Problem

The present inventors have conducted intensive studies about structure protection sheets (which may be simply referred to as "protection sheets" hereinafter) used to repair the surfaces of roofs of structures. As a result, the present inventors have found that by attaching a protection sheet having a particular configuration to a roof of a structure instead of a blue sheet, the formation of a gap between the sheet and the roof can be avoided. Moreover, the present inventors have succeeded in designing the protection sheet such that it has properties tailored to the characteristics of the roof. Specifically, the protection sheet has the following properties: conformability high enough to conform to cracks or bulges of a slate roof or the like; waterproof performance, salt penetration resistance, and anti-neutralization ability high enough to prevent penetration of deterioration factors such as water and chloride ions; and water vapor permeability high enough to allow a roof to discharge moisture in the form of water vapor. Furthermore, the present inventors have succeeded in incorporating a layer for ensuring the strength properties of the protection sheet itself and a layer for ensuring its thermal barrier performance. In consequence, the inventors have completed the present invention. The protection sheet can be used also to repair parts other than roofs of structures, such as walls, eaves, fences, gate piers, gates, and gate roofs.

(1) A structure protection sheet according to the present invention is a structure protection sheet to be attached to a surface of a roof of a structure, the structure protection sheet including, in order, a bonding layer, a polymer-cement hardened layer, and a thermal barrier resin layer.

In this invention, the structure protection sheet is made up of layers that do not include a substrate or a reinforcing member and can thus be easily attached to the part of the structure's roof that is to be repaired. Thus, the formation of a gap between the roof and the protection sheet can be avoided, and simple repair comparable in effectiveness to full-fledged repair can be achieved within a work period similar to that required for placement of a blue sheet.

Specifically, in a roof repair method using the structure protection sheet according to the present invention, the repair work can be completed simply by first cleaning the parts to be repaired with water or the like, then cutting the protection sheet into pieces with suitable sizes, and attaching the cut pieces sequentially to the parts to be repaired such that the bonding layers are in contact with the repaired parts. The attachment of the protection sheet according to the present invention is possible even in a hot, humid environment and requires no drying step, thus being able to be completed in a short work period. Additionally, by virtue of including the polymer-cement hardened layer and the resin layer located on the polymer hardened layer, the protection sheet can prevent rain leakage or the like over a long period of time and allows for long-term protection of the structure's roof.

In the protection sheet, the polymer-cement hardened layer to be placed facing the structure's roof is excellent in properties such as adhesion to the roof, and the resin located on the polymer-cement hardened layer can be provided with desired properties such as high waterproof performance, high salt penetration resistance, and high anti-neutralization ability.

Additionally, the protection sheet can be mass-produced by a coating step and a drying step on a factory production line. Thus, the present invention allows for cost reduction, significant shortening of the work period spent at the worksite, and long-term protection of the structure's roof.

Additionally, the protection sheet according to the present invention, which includes the thermal barrier resin layer, can successfully reduce the temperature rise of the roofing material under the protection sheet by receiving direct sunlight on the thermal barrier resin layer.

Furthermore, the roof repair method using the protection sheet according to the present invention is essentially different from the conventional method which involves the placement of a blue sheet and which is intended to temporarily keep out wind and rain, and makes it possible to achieve long-lasting repair by work procedures much simpler than those in the conventional method. This is because the protection sheet according to the present invention has excellent water resistance and salt penetration resistance and can protect the roofing material from substances which could impair the roofing material, because the protection sheet has a moderate level of water vapor permeability that permits the roofing material to discharge excess moisture to the outside environment and thus avoid corrosion or resist rusting, and because the protection sheet has thermal barrier performance high enough to reduce the temperature rise of the roofing material.

In the structure protection sheet according to the present invention, the thermal barrier resin layer preferably contains an inorganic thermal barrier pigment and/or an organic thermal barrier pigment.

In this case, the thermal barrier resin layer can have desired thermal barrier performance and successfully prevent the direct sunlight-induced temperature rise of the roofing material to which the structure protection sheet according to the present invention is attached.

In the structure protection sheet according to the present invention, a lightness $L^*$ of reflected light from a surface of the thermal barrier resin layer and a temperature rise $\Delta t$ (°C) of the roof of the structure in a region to which the structure protection sheet is attached preferably satisfy the following inequalities (1), (2), and (3):

$$\Delta t < -0.0769(L^*) + 11.982 \qquad (1);$$

$$0 < L^* < 100 \qquad (2);$$

and

$$0 < \Delta t < 9 \qquad (3).$$

In this case, the thermal barrier resin layer has desired thermal barrier performance and can successfully prevent the direct sunlight-induced temperature rise of the roofing material to which the structure protection sheet according to the present invention is attached.

In the structure protection sheet according to the present invention, the bonding layer preferably includes an acrylic pressure-sensitive adhesive.

Acrylic pressure-sensitive adhesives allow for easy adjustment of the pressure-sensitive adhesive force to the structure and high flexibility in material design and are excellent in transparency, weathering resistance, and heat resistance. The use of an acrylic pressure-sensitive adhesive enables the structure protection sheet according to the present invention to more successfully protect the structure.

In the structure protection sheet according to the present invention, the polymer-cement hardened layer may contain a cement component and a resin, and a content of the resin in the polymer-cement hardened layer may be from 10 to 40% by weight. The content of the resin is more preferably from 20 to 30% by weight.

In this case, the polymer-cement hardened layer has high conformability and compatibility and thus exhibits high adhesion by itself. Additionally, the cement component contained in the polymer-cement hardened layer facing the structure acts to enhance the adhesion to the structure such as a concrete structure.

The structure protection sheet according to the present invention preferably further includes a mesh layer or a non-woven fabric layer.

In this case, the inclusion of the mesh layer or non-woven fabric layer enables the structure protection sheet according to the present invention to excel in strength properties etc.

(2) A method for using a structure protection sheet according to the present invention is a method for revamping a structure using the structure protection sheet according to the present invention, the method including attaching the structure protection sheet to a surface of a roof of the structure via the bonding layer.

In this invention, the structure protection sheet used is made up of layers that do not include a substrate or a reinforcing member and can thus be easily attached to the part of the structure's roof that is to be repaired. Thus, the formation of a gap between the roof and the protection sheet can be avoided, and simple repair comparable in effectiveness to full-fledged repair can be achieved within a work period similar to that required for placement of a blue sheet.

Specifically, the repair work can be completed simply by first cleaning the parts to be repaired with water or the like, then cutting the protection sheet into pieces with suitable sizes, and attaching the cut pieces sequentially to the parts to be repaired such that the bonding layers are in contact with the repaired parts.. The attachment of the protection sheet according to the present invention is possible even in a hot, humid environment and requires no drying step, thus being able to be completed in a short work period. Additionally, since the protection sheet includes the polymer-cement hardened layer and the resin layer located on the polymer hardened layer, the method according to the present invention makes it possible to prevent rain leakage or the like over a long period of time and allows for long-term protection of the structure's roof.

The method according to the present invention is essentially different from the conventional method which involves the placement of a blue sheet and which is intended to temporarily keep out wind and rain, and makes it possible to achieve long-lasting repair by work procedures much simpler than those in the conventional method. This is because the protection sheet according to the present invention has excellent water resistance and salt penetration and can protect the roofing material from substances which could impair the roofing material, because the protection sheet has a moderate level of water vapor permeability that permits the roofing material to discharge excess moisture to the outside environment and thus avoid corrosion or resist rusting, and because the protection sheet has thermal barrier performance high enough to reduce the temperature rise of the roofing material.

**Advantageous Effects of Invention**

The present invention can provide a protection sheet that allows for easy and long-lasting repair of the surface of a roof of a structure and a method for using the protection sheet. In particular, the present invention can provide: a protection sheet with properties tailored to the characteristics of a roof of a structure, the protection sheet being adapted to conform to cracks or bulges of the roof, prevent penetration of deterioration factors such as water and chloride ions into the structure's roof, exhibit permeability high enough to permit discharge of moisture or deterioration factors from the structure's roof, have improved strength properties, and have thermal barrier performance; and a method for using the protection sheet. The method according to the present invention is advantageous in that the stability and uniformity of repair quality can be improved compared to those achievable by a method in which several layers are formed on top of one another by a manual coating process using a coating material for rain leakage repair.

**Brief Description of Drawings**

FIGS. 1A and 1B are cross-sectional views showing examples of a structure protection sheet according to the present invention.
FIGS. 2A and 2B are schematic views showing how the structure protection sheet according to the present invention is attached to a roof of a structure.
FIGS. 3A and 3B are cross-sectional views showing other examples of the structure protection sheet according to the present invention.
FIGS. 4A and 4B are schematic views showing an example of a mesh layer of the structure protection sheet according to the present invention.
FIG 5 is a schematic view showing a conventional roof repair method.

**Description of Embodiments**

Hereinafter, a structure protection sheet according to the present invention and a method for using the structure protection sheet will be described with reference to the drawings. The present invention can be modified into various forms having the technical features of the present invention and is not limited to the embodiments described below and depicted in the drawings.

[Structure Protection Sheet]

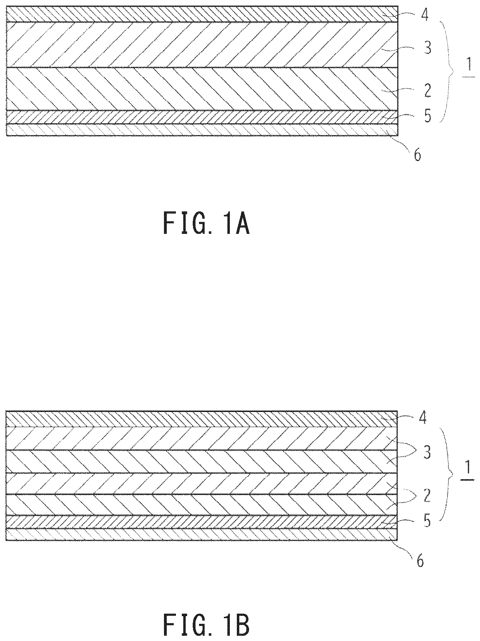

The structure protection sheet according to the present invention is a sheet to be attached to a roof of a structure. The structure protection sheet attached to the structure includes a thermal barrier coating layer as an outermost layer.
As shown in FIG 1, such a structure protection sheet 1 according to the present invention includes, in order, a bonding layer 5, a polymer-cement hardened layer 2, and a thermal barrier resin layer 3. Each of the polymer-cement hardened layer 2 and the thermal barrier resin layer 3 may be formed as a single layer as shown in FIG 1A or may be formed as a multilayer as shown in FIG 1B. Depending on the required performance, another layer may be located between the polymer-cement hardened layer 2 and the thermal barrier resin layer 3.
The structure protection sheet 1 according to the present invention preferably has a water vapor transmission rate of 10 to 50 $g/m^2 \cdot day$. It may be inferred that the polymer-cement hardened layer 2, which contains a cement component, is expected to have a certain level of water vapor transmission rate, whereas the thermal barrier resin layer 3 located on the polymer-cement hardened layer 2 is inferior in water vapor transmission rate. However, the present invention is immune to this problem, and the structure protection sheet 1 as a whole can exhibit a water vapor transmission rate within a certain range. Thus, the structure protection sheet 1 attached to a structure such as a concrete structure permits water vapor present inside the structure to successfully pass through, and come out of, the structure protection sheet 1. This can successfully prevent bulging of the structure and further prevent a reduction in the adhesive performance of the structure protection sheet 1. One of the other advantages offered by the structure protection sheet 1 having a water vapor transmission rate within a certain range is that the structure protection sheet 1's configuration which permits easy escape of water vapor is likely to reduce corrosion of a metal (such as reinforcing steel) contained in the roofing material of the structure. Additionally, in the case where the structure protection sheet 1 is attached to a roof of a structure in a rainy day in which the roof has a wet surface and contains moisture within itself, the fact that the structure protection sheet 1 has a water vapor transmission rate as mentioned above allows moisture infiltrating the structure's roof to easily come out of the roof after attachment of the structure protection sheet 1 (after repair of the roof). Furthermore, the structure protection sheet 1 according to the present invention is suitable for attachment to freshly-hardened concrete which contains a lot of moisture within it.
Another advantage of the structure protection sheet 1 according to the present invention is that the controllability of the water vapor transmission rate enables the structure protection sheet 1 to be attached to the surface of a roof of a structure even in a situation where, for example, cement of the roofing material of the structure has not yet hardened. If cement molded into a roof rapidly loses moisture during hardening, the rapid loss of moisture is likely to lead to the cement being porous and the roofing material having a reduced strength. The structure protection sheet 1 according to the present invention is also advantageous in that attaching the structure protection sheet 1 to cement before hardening allows for control of the speed of moisture removal from the cement during hardening, thus reducing the likelihood that the cement becomes porous as descried above.
If the water vapor transmission rate is less than 10 $g/m^2 \cdot day$, the structure protection sheet 1 according to the present invention cannot permit water vapor to pass therethrough sufficiently to prevent phenomena such as bulging of a structure's roof to which the structure protection sheet 1 has been attached, and the adhesive performance of the structure protection sheet 1 could be insufficient. If the water vapor transmission rate is more than 50 g/m$^2$•day, the speed of moisture removal from cement during hardening could be so high as to cause the hardened cement to have the defect of being porous. The water vapor transmission rate is preferably in the range of 20 to 50 g/m$^2$•day.

The structure protection sheet 1 according to the present invention which has such a water vapor transmission rate can be obtained, for example, by using the polymer-cement hardened layer 2 described later and using a resin having a water vapor transmission rate within a certain range as a component of the thermal barrier resin layer 3 described later.

The water vapor transmission rate in the present invention can be measured by a method described later.

Two or more structure protection sheets according to the present invention may be used together by being placed on top of one another. A structure's roof protected with one structure protection sheet according to the present invention can be further protected with another protection sheet placed on top of the one structure protection sheet. For example, two structure protection sheets according to the present invention may be attached to a roof of a structure in such a manner that the two structure protection sheets are arranged side-by-side, and then another structure protection sheet according to the present invention may be further attached so as to cover the boundary between the side-by-side structure protection sheets.

The structure protection sheet 1 according to the present invention includes the polymer-cement hardened layer 2 containing cement and a resin component. Thus, one structure protection sheet 1 according to the present invention exhibits high adhesive performance to the thermal barrier resin layer 3 of another structure protection sheet 1 previously attached to a roof of a structure. This is why two or more structure protection sheets 1 according to the present invention can be suitably used together by being placed on top of one another.

For the structure protection sheet 1 according to the present invention, the thickness distribution is preferably within ±100 μm. When the thickness distribution is within this range, the use of the structure protection sheet 1 allows a worker to reliably place layers with a small variation in thickness onto the surface of a roof of a structure even if the worker is not well-trained. Additionally, controlling the thickness distribution within the above range makes it easier to reinforce a roof of a structure uniformly.

The polymer-cement hardened layer 2 to be placed facing a structure is excellent in properties such as adhesion to a roof of the structure, and the thermal barrier resin layer 3 located on the polymer-cement hardened layer 2 can be easily provided with desired properties such as high waterproof performance, high salt penetration resistance, and high anti-neutralization ability.

Additionally, the structure protection sheet 1 according to the present invention can be mass-produced by a coating step and a drying step on a factory production line. Thus, the structure protection sheet 1 allows for cost reduction, significant shortening of the work period spent at the worksite, and long-term structure protection.

Additionally, the structure protection sheet according to the present invention, which includes the thermal barrier coating layer as an outermost layer, can exhibit excellent thermal barrier performance when attached to a structure's roof which is exposed to direct sunlight, and can successfully reduce the temperature rise of the structure's roof.

Additionally, the structure protection sheet 1 according to the present invention, which includes the bonding layer 5, eliminates the need to apply an adhesive and form an adhesive layer at the worksite, and can be attached by a worker to the surface of a roof of a structure via the bonding layer with a uniform thickness even if the worker is not well-trained. Thus, the work period required for sheet attachment to the surface of the roof of the structure can be significantly shortened, and the structure can be protected over a long period of time.

Hereinafter, specific examples of the constituent elements of the invention will be described in detail.

(Roof)

The structure having a roof to which the structure protection sheet of the present invention is attached is not limited to a particular type, and examples of the structure include large-sized structures such as houses, gymnasiums, hospitals, and public facilities.

The roof of the structure is not limited to a particular form and may be any form of roof such as a gable roof, a hip roof, a pavilion roof, a flat roof, a shed roof, a beckoning roof, or a barrel roof.

Specific examples of the roof of the structure include slate roofs, Galvalume™ roofs, corrugated metal roofs (roofs made up of zinc-plated steel sheets), metal roofs made up of iron sheets to which a coating material has been applied, flat roofs (including roofs called "deck roofs), and concrete roofs.

A slate is constructed of a cement layer, an inorganic decorative (cement) layer located on the cement layer, an inorganic colored stone layer located on the inorganic decorative layer, and an inorganic coating material applied to the inorganic colored stone layer. Slates are simple in appearance, have a variety of colors, and are light-weight and inexpensive. For these reasons, slates are widely used as a roofing material for houses. However, slate roofs are more brittle than Galvalume™ roofs etc. and inferior in durability and waterproof performance to roofs made of materials other than slates, thus being more likely to suffer from problems such as breakage. Such a slate roof is particularly suitable as a roof to which the roof repair method according to the present invention is applied.

In the following description, a roof of a structure may be referred to as a "slate roof or the like".

The surface of the roof of the structure may be smooth or have asperities like those of a common slate roof or the like. The protection sheet according to the present invention has a particular configuration, by virtue of which no gap is formed between the protection sheet and the roof of the structure even when the roof is a slate roof or the like which has surface asperities.

Moreover, the protection sheet is especially advantageous in that when applied to the roof of the structure, the protection sheet can conform to cracks or bulges of the roof of the structure, prevent penetration of deterioration factors such as water and chloride ions into the roof of the structure, and allow the roof of the structure to discharge moisture in the form of water vapor. In particular, in the case where the roof is a slate roof or a flat roof as mentioned above which is made of a material prone to accumulate rainwater, the water vapor discharge ability is significantly effective to prevent deterioration of the roofing material.

Furthermore, the protection sheet according to the present invention, which includes a thermal barrier coating layer as an outermost layer, can successfully reduce the temperature rise of the roof of the structure even when exposed to direct sunlight.

(Structure Protection Sheet)

As shown in FIG 1, the protection sheet 1 according to the present invention includes, in order, a bonding layer 5 to be placed on the roof of the structure, a polymer-cement hardened layer 2, and a thermal barrier resin layer 3. Each of the polymer-cement hardened layer 2 and the thermal barrier resin layer 3 may be formed as a single layer as shown in FIG 1A or may be formed as a multilayer as shown in FIG 1B. Depending on the required performance, another layer may be located between the polymer-cement hardened layer 2 and the thermal barrier resin layer 3.

(Polymer-Cement Hardened Layer)

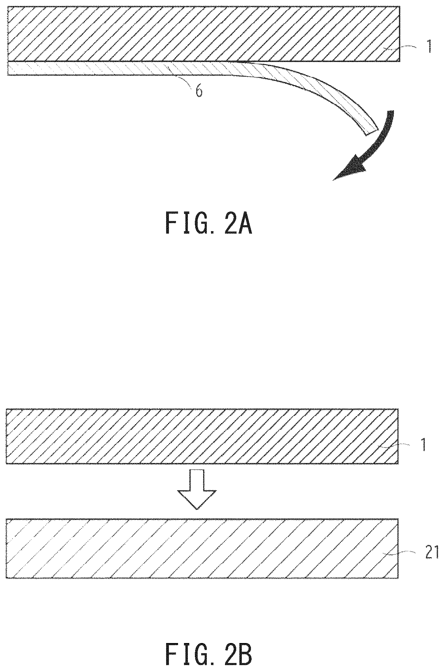

As shown in FIGS. 1 and 2, the polymer-cement hardened layer 2 is placed to face a roof 21 of a structure across the bonding layer 5. The polymer-cement hardened layer 2 may be a single layer of coat as shown in FIG 1A or may be a multilayer made up of at least two coats as shown in FIG 1B. Whether the polymer-cement hardened layer 2 is formed as a single layer or a multilayer can be freely chosen in view of factors such as the overall thickness, the properties to be imparted (such as conformability and adhesive performance to the structure), the factory production line, and the production cost. For example, in the case where the production line is too short for a single layer to have a given thickness, the polymer-cement hardened layer 2 can be formed by applying two or more coats. For example, in the case of applying two coats, drying of the first coat is followed by formation of the second coat.

The polymer-cement hardened layer 2 may be a stack of layers with different characteristics. For example, the stack may include a layer having a high percentage of resin component as a layer adjacent to the thermal barrier resin layer 3; in such a case, the layer having a high percentage of resin component adheres to the resin layer, while a layer having a high percentage of cement component adheres to a concrete structure. This ensures very high adhesive performance to both the resin layer and the concrete structure.

The polymer-cement hardened layer 2 preferably contains a cement component and a resin. Specifically, a resin (resin component) containing a cement component is prepared in the form of a coating material, and the coating material is applied to obtain the polymer-cement hardened layer 2.

Examples of the cement component include various types of cement, limestone materials containing a component made of calcium oxide, and clay materials containing silicon dioxide. Among these, cement is preferred. Examples of the cement include Portland cement, alumina cement, high-early-strength cement, and fly ash cement. The choice of which cement to use depends on the properties required of the polymer-cement hardened layer 2 and is made, for example, in view of the level of conformability to the concrete structure. Particularly preferred concrete is Portland cement as specified in JIS R 5210.

Examples of the resin component include acrylic resins, acrylic-urethane resins, acrylic-silicone resins, fluoroResins, flexible epoxy resins, polybutadiene rubber, and acrylic resins having rubber properties (such as synthetic rubber containing an acrylic acid ester as a main component). The resin component is preferably the same as that of the thermal barrier resin layer 3 described later in order to enhance the adhesion between the polymer-cement hardened layer 2 and the thermal barrier resin layer 3.

The resin component used may be a thermoplastic resin, a thermosetting resin, or a photocurable resin. The word "hardened" in the term "polymer-cement hardened layer 2" is not intended to limit the resin component to a resin such as a thermosetting or photocurable resin which hardens through polymerization but intended to imply that any material may be used which hardens when finally formed into a layer.

The content of the resin component may be adjusted as appropriate depending on factors such as the material used. The content of the resin component is preferably from 10 to 40% by weight based on the total amount of the cement component and the resin component. If the content of the resin component is less than 10% by weight, the polymer-cement hardened layer 2 tends to have low adhesive performance to the thermal barrier resin layer 3 or tends to have difficulty maintaining the form of a layer. If the content of the resin component is more than 40% by weight, the polymer-cement hardened layer 2 could have insufficient adhesive performance to the concrete structure. In view of the above facts, the content of the resin component is more preferably from 15 to 35% by weight and even more preferably from 20 to 30% by weight.

The coating material for forming the polymer-cement hardened layer 2 is a coating solution prepared by mixing the cement component and the resin component in a solvent. The resin component is preferably an emulsion. One example is an acrylic emulsion containing fine polymer particles resulting from emulsion polymerization of a monomer such as an acrylic acid ester by means of an emulsifier. A preferred example of the acrylic emulsion is an acrylic acid polymer emulsion resulting from polymerization in which a monomer or monomer mixture containing one or more acrylic acid esters or methacrylic acid esters is polymerized in water containing an added surfactant.

The content of the acrylic acid ester or the like for forming the acrylic emulsion is not limited to a particular value but selected in the range of 20 to 100% by mass. The amount of the surfactant to be added is selected as necessary and not limited to a particular value. The surfactant is added in an amount sufficient to produce the emulsion.

The polymer-cement hardened layer 2 can be formed by applying the coating solution onto a release sheet and drying the applied solution to remove the solvent (preferably, water). For example, a composition prepared by mixing the cement component and the acrylic emulsion is used as the coating solution to form the polymer-cement hardened layer 2. After formation of the polymer-cement hardened layer 2 on the release sheet, the thermal barrier resin layer 3 may be formed on the polymer-cement hardened layer 2. Alternatively, the thermal barrier resin layer 3 may be first formed on the release sheet, and then the polymer-cement hardened layer 2 may be formed on the thermal barrier resin layer 3. In the case where the structure protection sheet 1 of the present invention is decorated, for example, the structure protection sheet 1 may be produced by a method including: subjecting a release sheet to embossing or matting (formation of a textured pattern); forming the thermal barrier resin layer 3 (which may be a single layer or a multilayer consisting of two or more layers) first and then the polymer-cement hardened layer 2 (which may be a single layer or a multilayer consisting of two or more layers) on the release sheet; and decorating the thermal barrier resin layer 3.

The thickness of the polymer-cement hardened layer 2 is not limited to a particular value and is freely chosen depending on factors such as the type, the degree of aging, and the shape, of the structure's roof 21. Specifically, for example, the thickness of the polymer-cement hardened layer 2 may be in the range of 0.5 to 1.5 mm. For example, when the thickness of the polymer-cement hardened layer 2 is 1 mm, the thickness variation is preferably within $\pm 100$ $\mu$m. Such a high thickness accuracy cannot be achieved by coating work at the worksite, but can be achieved by a stable coating process on a factory production line. Even when the thickness is greater than 1 mm, the thickness variation can be controlled within $\pm 100$ $\mu$m. When the thickness is less than 1 mm, the thickness variation can be further reduced.

The presence of the cement component in the polymer-cement hardened layer 2 allows water vapor to easily pass through the polymer-cement hardened layer 2. The water vapor transmission rate of the polymer-cement hardened layer 2 is, for example, from about 20 to 60 g/m$^2$•day. Furthermore, the cement component is well compatible, for example, with the cement component of concrete and can offer high adhesion to the concrete surface. Additionally, as shown in FIG 1, the structure protection sheet 1 according to the present invention includes the bonding layer 5, to which the polymer-cement hardened layer 2 containing the cement component strongly adheres. Moreover, the polymer-cement hardened layer 2 is stretchable and thus can conform to a change in concrete in the event that the structure's roof 21 cracks or bulges.

(Mesh Layer)

The structure protection sheet according to the present invention preferably further includes a mesh layer.

The inclusion of the mesh layer enables the structure protection sheet 1 according to the present invention to have excellent strength properties.

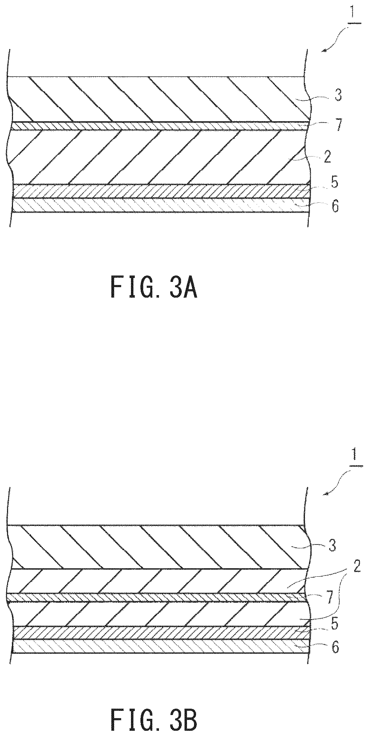

As shown in FIG 3A, the structure protection sheet 1 according to the present invention preferably includes a mesh layer 7 at the interface between the polymer-cement hardened layer 2 and the thermal barrier resin layer 3 in order to achieve a high bond strength.

The bond strength can be determined as follows: the polymer-cement hardened layer 2 of the structure protection sheet 1 according to the present invention is attached to a concrete surface via the bonding layer 5, a tensile jig is secured to the surface of the thermal barrier resin layer 3 and pulled in a direction away from the concrete at a rate of 1500 n/min, and the tensile load at which delamination occurs is measured as the bond strength.

As shown in FIG 3B, the mesh layer 7 may be located within the polymer-cement hardened layer 2. The mesh layer 7 may be located on one side of the polymer-cement hardened layer 2 that is not in contact with the thermal barrier resin layer 3, but is preferably buried within the polymer-cement hardened layer 2. Burying the mesh layer 7 within the polymer-cement hardened layer 2 increases the area of contact between the mesh layer 7 and the polymer-cement hardened layer 2, thus making it easier to achieve a high adhesive strength between the mesh layer 7 and the polymer-cement hardened layer 2 and ensure the strength of the polymer-cement hardened layer 2 as a whole. If the mesh layer 7 is not buried within the polymer-cement hardened layer 2, delamination is more likely to occur at the interface between the mesh layer 7 and the polymer-cement hardened layer 2.

In the case where the mesh layer 7 lies within the polymer-cement hardened layer 2, the mesh layer 7 may be located in the middle of the thickness of the polymer-cement hardened layer 2, but is preferably located toward the thermal barrier resin layer 3. When the mesh layer 7 is located within the polymer-cement hardened layer 2 and toward the thermal barrier resin layer 3, the bond force is increased by 1.3 times on average.

In the present invention, the mesh layer 7 is preferably impregnated with a material contained in the polymer-cement hardened layer 2 (the material is, for example, the cement component or resin component).

The state where the mesh layer 7 is impregnated with a material contained in the polymer-cement hardened layer 2 refers to a state where the material contained in the polymer-cement hardened layer 2 fills gaps between fibers forming the mesh layer 7. This impregnated state makes it easier to achieve a very high adhesive strength between the mesh layer 7 and the polymer-cement hardened layer 2. Additionally, the interaction between the mesh layer 7 and the material of the polymer-cement hardened layer 2 is likely to be enhanced, and the enhanced interaction makes it easier to further improve the strength properties of the structure protection sheet 1.

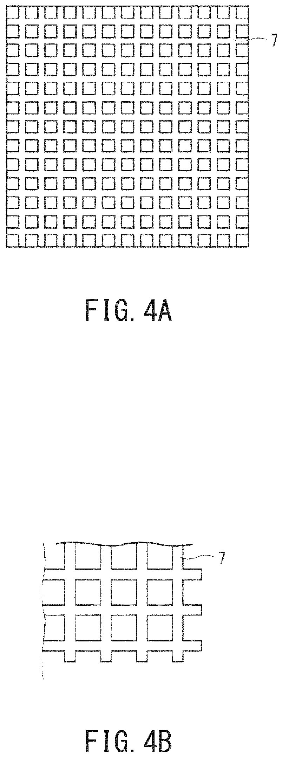

For example, the mesh layer 7 is constructed of warp and weft fibers arranged in a grid pattern as shown in FIG 4.

The fibers preferably include, for example, at least one type of fibers selected from the group consisting of polypropylene fibers, vinylon fibers, carbon fibers, aramid fibers, glass fibers, polyester fibers, polyethylene fibers, nylon fibers, and acrylic fibers. Among these fibers, polypropylene fibers and vinylon fibers can be suitably used.

The mesh layer 7 is not limited to a particular form and may be in the form of a biaxial braided fabric as shown in FIG 4. Alternatively, any other form of mesh layer 7 such as a triaxial braided fabric may be used.

Desirably, the mesh layer 7 has a wire pitch of 50 to 1.2 mm (wire density = 0.2 to 8.0 wires/cm). If the wire pitch is less than 1.2 mm, the bond between the portions of the polymer-cement layer that are above and below the mesh layer could weaken, and the surface strength of the structure protection sheet 1 could be insufficient. If the wire pitch is more than 50 mm, the structure protection sheet 1 could have a reduced tensile strength although the surface strength of the structure protection sheet 1 is not adversely affected.

In the structure protection sheet 1 according to the present invention, there is a trade-off relationship between tensile strength and surface strength. The mesh layer 7 suitable for use in the present invention is one that has a wire pitch in the range of 50 to 1.2 mm.

The mesh layer 7 may be sized such that the mesh layer 7 as viewed from the upper side of the polymer-cement hardened layer 2 covers the entire polymer-cement hardened layer 2, or may be smaller in size than the polymer-cement hardened layer 2.

That is, the area of the mesh layer 7 as viewed in plan may be equal to or smaller than the area of the polymer-cement hardened layer 2 as viewed in plan. The plan view area of the mesh layer 7 is preferably from 60 to 95% of the plan view area of the polymer-cement hardened layer 2. If the percentage is less than 60%, the strength properties of the structure protection sheet according to the present invention could be insufficient or vary from region to region in the structure protection sheet. If the percentage is more than 95% and two polymer-cement hardened layers 2 are placed on top of each other with the mesh layer 7 interposed therebetween, the adhesive strength between the polymer-cement hardened layers 2 could be low, and the low adhesive strength increases the risk that delamination will occur between the two polymer-cement hardened layers 2 when the structure protection sheet according to the present invention is attached to a structure. The plan view areas of the mesh layer 7 and other layers can be measured by a known method.

(Non-Woven Fabric Layer)

The structure protection sheet according to the present invention may include a non-woven fabric layer instead of the mesh layer described above.

The inclusion of the non-woven fabric layer also enables the structure protection sheet 1 according to the present invention to have excellent strength properties.

The non-woven fabric layer is preferably placed at the same location as the mesh layer 7 described above.

The non-woven fabric forming the non-woven fabric layer is not limited to a particular type and may be any non-woven fabric formed in a sheet shape without weaving fibers.

The fibers used to form the non-woven fabric may be natural fibers or chemical fibers.

Examples of the chemical fibers include: fibers made of a polyolefin resin such as polypropylene or polyethylene; fibers made of a polyester resin; fibers made of a polyacrylic resin; fibers made of a polyamide resin such as nylon; and synthetic fibers made of a copolymer, a modified product, or a combination of any of these resins. Among these fibers, polyester fibers are preferred because they are excellent in properties such as water resistance, heat resistance, dimensional stability, and weathering resistance.

In the present invention, a high-strength vinylon mesh for civil engineering or a vinylon or polyester cheesecloth for agriculture can also be used instead of the mesh layer described above.

The weight per unit area of the non-woven fabric forming the non-woven fabric layer is preferably from 50 to 200 g/m$^2$ and more preferably from 75 to 150 g/m$^2$. If the weight per unit area of the non-woven fabric is below such a range, the non-woven fabric is so thin that the strength properties or handleability of the structure protection sheet according to the present invention could decline. If the weight per unit area of the non-woven fabric is beyond the above range, the structure protection sheet according to the present invention could have low gas permeability and fail to achieve the water vapor transmission rate as previously described.

(Thermal Barrier Resin Layer)

As shown in FIGS. 1 and 2, the thermal resin layer 3 is located opposite from the structure's roof 21. The thermal barrier resin layer 3 may be a single layer as shown in FIG 1A or may be a multilayer made up of at least two layers as shown in FIG 1B. Whether the thermal barrier resin layer 3 is formed as a single layer or a multilayer can be freely chosen in view of factors such as the overall thickness, the properties to be imparted (such as thermal barrier performance, waterproof performance, salt penetration resistance, anti-neutralization ability, and water vapor permeability), the length of the factory production line, and the production cost. For example, in the case where the production line is too short for a single layer to have a given thickness, the thermal barrier resin layer 3 can be formed by applying two or more coats. In the case of applying two coats, drying of the first coat is followed by application of the second coat. The applied second coat is then dried.

The thermal barrier resin layer 3 is a layer for ensuring the thermal barrier performance of the structure protection sheet according to the present invention and preferably contains an inorganic thermal barrier pigment and/or an organic thermal barrier pigment.

Examples of the inorganic thermal barrier pigment include metal oxide pigments such as titanium oxide, magnesium oxide, barium oxide, calcium oxide, zinc oxide, zirconium oxide, yttrium oxide, indium oxide, sodium titanate, silicon oxide, nickel oxide, manganese oxide, chromium oxide, iron oxide, copper oxide, cerium oxide, and aluminum oxide; composite oxide pigments such as iron oxide-manganese oxide, iron oxide-chromium oxide (such as "DAIPYROXIDE BLACK #9595" manufactured by Dainichiseika Color & Chemicals Mfg. Co., Ltd. or "Black 6350" manufactured by Asahi Kasei Kogyo Co., Ltd.), iron oxide-cobalt oxide-chromium oxide (such as "DAIPYROXIDE BROWN #9290" or "DAIPYROXIDE BLACK #9590" manufactured by Dainichiseika Color & Chemicals Mfg. Co., Ltd.), copper oxide-magnesium oxide (such as "DAIPYROXIDE BLACK #9598" manufactured by Dainichiseika Color & Chemicals Mfg. Co., Ltd.), manganese oxide-bismuth oxide (such as "Black 6301" manufactured by Asahi Kasei Kogyo Co., Ltd.), and manganese oxide-yttrium oxide (such as "Black 6303" manufactured by Asahi Kasei Kogyo Co., Ltd.); metal pigments such as silicon, aluminum, iron, magnesium, manganese, nickel, titanium, chromium, and calcium; and alloy pigments such as iron-chromium, bismuth-manganese, iron-manganese, and manganese-yttrium. One of these pigments may be used alone, or two or more thereof may be used in combination.

Examples of the organic thermal barrier pigments include azo pigments, azomethine pigments, lake pigments, thioindigo pigments, anthraquinone pigments (such as anthanthrone pigment, diaminoanthraquinonyl pigment, indanthrone pigment, flavanthrone pigment, and anthrapyrimidine pigment), perylene pigments, perinone pigments, diketopyrrolopyrrole pigments, dioxazine pigments, phthalocyanine pigments, quinophthalone pigments, quinacridone pigments, isoindoline pigments, and isoindolinone pigments. One of these pigments may be used alone, or two or more thereof may be used in combination.

The content of the inorganic thermal barrier pigment and/or organic thermal barrier pigment in the thermal barrier resin layer 3 is not limited to a particular value but is preferably 33% by mass or more. If the content of the inorganic thermal barrier pigment and/or organic thermal barrier pigment is less than 33% by mass, the thermal barrier performance of the protection sheet 1 according to the present invention could be insufficient. The content of the inorganic thermal barrier pigment and/or organic thermal barrier pigment is more preferably 50% by mass or more, even more preferably 70% by mass or more, and most preferably 100% by mass.

The thermal barrier resin layer 3 preferably contains a resin component in addition to the inorganic thermal barrier pigment and/or organic thermal barrier pigment described above.

The resin component is not limited to a particular type. A commercially-available resin emulsion can be used, and examples of the resin emulsion include an emulsion of an acrylic resin, an emulsion of an acrylic-silicone resin, an emulsion of polyvinyl acetate, an emulsion of polystyrene, an emulsion of acrylonitrile, an emulsion of VeoVa (branched fatty acid vinyl ester), an emulsion of natural or synthetic rubber, and an emulsion of a copolymer of two or more of these resins. Among these resins, an acrylic resin and an acrylic-silicone resin are preferred. One of the above resin components may be used alone, or two or more thereof may be used in combination.

The thermal barrier resin layer 3 may contain an additive. Examples of the additive include an extender pigment, a thickener, a dispersant, an anti-foaming agent, an antiseptic agent, and a leveling agent.

Examples of the extender pigment include calcium carbonate, kaolin, barium sulfate, and hydrated magnesium silicate. One of these extender pigments may be used alone, or two or more thereof may be used in combination.

Examples of the dispersant include anionic polymer dispersants.

The thermal barrier resin layer 3 is obtained by applying a coating material formable into a resin layer that has flexibility, can conform to cracks or fissures of concrete, and is excellent in waterproof performance, salt penetration resistance, anti-neutralization ability, and water vapor permeability. Examples of the resin contained in the thermal resin layer 3 include acrylic resins having rubber properties (such as synthetic rubber containing an acrylic acid ester as a main component), acrylic-urethane resins, acrylic-silicone resins, fluororesins, flexible epoxy resins, and polybutadiene rubber. The resin material is preferably the same as the resin component contained in the polymer-cement hardened layer 2. The resin material is particularly preferably a resin containing an elastic film-forming component such as rubber.

When an acrylic resin having rubber properties is used, the acrylic resin is preferably in the form of an aqueous emulsion containing an acrylic rubber copolymer because such an emulsion is excellent in safety and ease of application. The percentage of the acrylic rubber copolymer in the emulsion is, for example, from 30 to 70% by mass. The acrylic rubber copolymer emulsion can be obtained, for example, by emulsion polymerization of monomers in the presence of a surfactant. The surfactant used may be anionic, non-ionic, or cationic.

The lightness L* of reflected light from the surface of the thermal barrier resin layer 3 and the temperature rise $\Delta t$ (°C) of the structure's roof in a region to which the protection sheet 1 is attached preferably satisfy the following inequalities (1), (2), and (3).

$$\Delta t < -0.0769(L^*) + 11.982 \qquad (1)$$

$$0 < L^* < 100 \qquad (2)$$

$$0 < \Delta t < 9 \qquad (3)$$

When the inequalities (1) to (3) are satisfied, the structure protection sheet 1 according to the present invention exhibits excellent thermal barrier performance.

In the present invention, the thermal barrier resin layer 3 more preferably contains the inorganic thermal barrier pigment as described above in order to further reduce the temperature rise $\Delta t$ of the structure's roof. When the thermal barrier resin layer 3 includes the inorganic thermal barrier pigment, the lightness L* of reflected light from the surface of the thermal barrier resin layer 3 and the temperature rise $\Delta t$ (°C) of the structure's roof in the region to which the protection sheet 1 is attached preferably satisfy the following inequality (4).

$$\Delta t < -0.0479(L^*) + 8.891 \qquad (4)$$

The thickness of the thermal barrier resin layer 3 is not limited to a particular value. For example, the thickness of the thermal barrier resin layer 3 is preferably from 50 to 200 $\mu$m. When the thickness of the thermal barrier resin layer 3 is within this range, the thermal barrier resin layer 3 can exhibit high thermal barrier performance such that the inequalities (1) to (3) are satisfied. The thickness of the thermal barrier resin layer 3 is more preferably at least 70 $\mu$m and at most 150 $\mu$m.

The lightness (L*) of reflected light from the surface of the thermal barrier resin layer 3 can be measured, for example, by means of ultraviolet-visible-near-infrared spectrophotometer V-770 (manufactured by JASCO Corporation), and the temperature rise $\Delta t$ (°C) of the structure's roof in a region to which the structure protection sheet 1 is attached can be measured, for example, by means of a type K thermocouple.

In the structure protection sheet according to the present invention, the thermal barrier resin layer 3 is preferably made using a resin that exhibits a high water vapor transmission rate. The inclusion of the thermal barrier resin layer 3 made of such a resin enables the structure protection sheet according to the present invention to have a water vapor transmission rate falling within the range as previously mentioned.

The coating material for forming the thermal barrier resin layer 3 is a coating solution prepared by mixing a resin composition and a solvent. The coating solution is applied onto a release sheet and then dried to remove the solvent and thus form the thermal barrier resin layer 3. The solvent may be water or an aqueous solvent or may be an organic solvent such as xylene or mineral spirit. In Examples described later, an aqueous solvent is used, and the thermal barrier resin layer 3 is made with an acrylic rubber composition. The layer formation on the release sheet is not limited to a particular order of layers. For example, as described above, the thermal barrier resin layer 3 may be formed first and then the polymer-cement hardened layer 2 may be formed. Alternatively, the polymer-cement hardened layer 2 may be formed first and then the thermal barrier resin layer 3 may be formed.

The thermal barrier resin layer 3 has high waterproof performance, salt penetration resistance, and anti-neutralization ability and is preferably permeable to water vapor. The water vapor transmission rate of the thermal barrier resin layer 3 is desirably adjusted as appropriate such that, for example, the water vapor transmission rate of the structure protection sheet 1 according to the present invention falls within the range of 10 to 50 $g/m^2 \cdot day$. In this case, the structure protection sheet 1 can have high waterproof performance, salt penetration resistance, and anti-neutralization ability and further have a certain level of water vapor permeability. When the thermal barrier resin layer 3 is made of a resin component identical to that of the polymer-cement hardened layer 2, the thermal barrier resin layer 3 can be well compatible with, and have high adhesion to, the polymer-cement hardened layer 2. The water vapor permeability is measured according to JIS Z 0208 "Testing Methods for Determination of the Water Vapour Transmission Rate of Moisture-Proof Packaging Materials".

The thermal barrier resin layer 3 may contain a pigment in order to increase the variety of colors that the structure protection sheet 1 according to the present invention can have.

The thermal barrier resin layer 3 may contain an inorganic substance. The thermal barrier resin layer 3 containing an inorganic substance can be scuff-resistant. The inorganic substance is not limited to a particular type, and examples of the inorganic substance include hitherto known materials such as particles of metal oxides such as silica, alumina, and titania.

(Bonding Layer)

The structure protection sheet 1 according to the present invention includes the bonding layer 5 on the side of the polymer-cement hardened layer 2 opposite from the thermal barrier resin layer 3 (the side that faces the structure's roof 21).

The presence of the bonding layer 5 on the surface of the polymer-cement hardened layer 2 eliminates the need to apply an adhesive and form an adhesive layer at the worksite when the structure protection sheet 1 according to the present invention is attached to the structure's roof 21. This leads to very high work efficiency and also makes it possible to attach the structure protection sheet 1 according to the present invention to the structure's roof 21 via a bonding layer having a uniform thickness without relying on the skill of a well-trained worker. Additionally, when the surface of the structure's roof 21 has small depressions, a pressure-sensitive adhesive layer formed as the bonding layer 5 can be placed into the depressions to enhance the adhesion of the structure protection sheet 1 according to the present invention to the structure's roof 21.

The bonding layer 5 may be a pressure-sensitive adhesive layer made using a pressure-sensitive adhesive or an adhesive layer made using an adhesive. In view of the pot life of the bonding layer 5, the bonding layer 5 is preferably a pressure-sensitive adhesive layer.

The pressure-sensitive adhesive is not limited to a particular type, and examples of the pressure-sensitive adhesive include known pressure-sensitive adhesives such as acrylic pressure-sensitive adhesives, silicone pressure-sensitive adhesives, urethane pressure-sensitive adhesives, and rubber pressure-sensitive adhesives. In the present invention, the bonding layer 5 is preferably made of an acrylic pressure-sensitive adhesive. An acrylic pressure-sensitive adhesive allows for easy adjustment of the pressure-sensitive adhesive force to the structure and high flexibility in material design and is excellent in transparency, weathering resistance, and heat resistance. Thus, the use of an acrylic pressure-sensitive adhesive enables the structure protection sheet 1 according to the present invention to more successfully protect the structure's roof 21.

The acrylic pressure-sensitive adhesive used is not limited to a particular product and may be a commercially-available product, examples of which include ORIBAIN™ 6574 (manufactured by Toyochem Co., Ltd.).

The weight per unit area of the bonding layer 5 made using the acrylic pressure-sensitive adhesive (this bonding layer may be referred to as "pressure-sensitive adhesive layer" hereinafter) is preferably from 20 to 250 $g/m^2$ because in this case the pressure-sensitive adhesive layer can exhibit a satisfactory bond force to the surface of the roof 21 of the structure such as a concrete structure.

The structure protection sheet 1 according to the present invention preferably has a bond force of 20 N/25 mm or more when attached to the surface of the structure's roof 21 via the pressure-sensitive adhesive layer. If the bond force is less than 20 N/25 mm, the adhesion of the structure protection sheet 1 according to the present invention to the surface of the structure's roof 21 could be unsatisfactory. The bond force is more preferably at least 20 N/25 mm.

In the case where the bonding layer 5 of the structure protection sheet 1 according to the present invention is an adhesive layer made using an adhesive, the adhesive is not limited to a particular type, and examples of the adhesive include known adhesives such as ultraviolet-curable adhesives and thermosetting adhesives.

Examples of such adhesives include urethane adhesives, epoxy adhesives, and adhesives made with acrylic resins having rubber properties (such as synthetic rubber containing an acrylic acid ester as a main component). Among these adhesives, an adhesive made of a resin component identical to the resin component of the polymer-cement hardened layer 2 of the structure protection sheet 1 is more preferred because such an adhesive exhibits a high adhesive strength to the polymer-cement hardened layer 2.

In the structure protection sheet 1 according to the present invention, the bonding layer 5 preferably contains a hardener. The bonding layer 5 containing the hardener exhibits an increased bond force to the structure and enables the structure protection sheet 1 according to the present invention to have a high punching strength. The punching strength will be described later.

The hardener used is not limited to a particular type and may be any known hardener such as an isocyanate hardener, an amine hardener, an epoxy hardener, or a metal chelate hardener.

In the structure protection sheet 1 according to the present invention, the bonding layer 5 preferably has a gel fraction of 30 to 70% because in this case the structure protection sheet 1 exhibits a strong bond force to the structure's roof 21 and has a high punching strength. The gel fraction is more preferably at least 40% and at most 65%.

In the structure protection sheet 1 according to the present invention, the bonding layer 5 preferably has a thickness of 50 to 200 $\mu$m. If the thickness of the bonding layer 5 is less than 50 $\mu$m, the bond force of the structure protection sheet 1 according to the present invention to the structure's roof 21 could be unsatisfactory. If the thickness of the bonding layer 5 is more than 200 $\mu$m, the thickness variation is likely to be large.

In the structure protection sheet 1 according to the present invention, as shown in FIG 1, a release film 6 is preferably attached to the side of the bonding layer 5 opposite from the polymer-cement hardened layer 2 in order to protect the surface of the bonding layer 5. The release film 6 is not limited to a particular type, and an example of the release film 6 is a film having a substrate layer and a release layer.

Examples of the material forming the substrate layer include: polyesters such as polyethylene terephthalate and polyethylene naphthalate; polyolefins such as polyethylene, polypropylene, and polymethylpentene; polyamides such as nylon 6; vinyl resins such as polyvinyl chloride; acrylic resins such as polymethylmethacrylate; cellulose resins such as cellulose acetate; and synthetic resins such as polycarbonate. The substrate layer may be formed using paper as a main component. The substrate layer may be a stack of two or more layers.

Examples of the material forming the release layer include silicone resins, melamine resins, and fluorinated polymers. The release layer can be formed by a coating process in which a coating solution containing the material forming the release layer and an organic solvent is applied onto the substrate layer by a known technique such as gravure coating, roll coating, comma coating, or lip coating and then a layer of the applied coating solution is dried and hardened. Before the release layer is formed on the surface of the substrate layer, the surface of the substrate layer may be subjected to corona treatment or adhesion-enhancing treatment.

As shown in FIG 1, the structure protection sheet 1 produced may include a release sheet 4 on the side of the thermal barrier resin layer 3 opposite from the polymer-cement hardened layer 2. The release sheet 4 can protect the surface of the structure protection sheet 1, for example, during transportation to the worksite. At the worksite, the structure protection sheet 1 with the release sheet 4 is bonded onto the structure's roof 21 to be protected, and then the release sheet 4 is separated. This significantly improves the work efficiency at the worksite. The release sheet 4 is preferably processing paper used in the production process of the structure protection sheet 1.

The processing paper used as the release sheet 4 is not limited to being made of a particular material and may be any hitherto known processing paper used in production processes. Preferred examples other than hitherto known processing paper include laminated paper having a layer of olefin resin such as polypropylene or polyethylene or a layer containing silicone. The release sheet 4 is not limited to having a particular thickness and may have any thickness that does not impair handleability during production and use. For example, the thickness of the release sheet 4 may be in the range of about 50 to 500 $\mu$m.

The structure protection sheet 1 described above permits discharge of moisture from a roof of a structure such as a concrete structure and can protect the concrete structure's roof 21 over a long period of time. In particular, the structure protection sheet 1 can have properties tailored to the characteristics of the concrete structure's roof 21. Specifically, the structure protection sheet 1 is adapted to conform to cracks or bulges of the concrete structure's roof 21, prevent penetration of deterioration factors such as water and chloride ions into the concrete structure's roof 21, and exhibit permeability high enough to permit discharge of deterioration factors from the concrete structure's roof 21. The structure protection sheet 1 is producible in a factory and can be mass-produced while ensuring high quality and stable properties. Thus, the structure protection sheet 1 can be used regardless of the skill of the worker and allow for shortening of the work period and reduction in the labor cost.

The structure protection sheet according to the present invention can be used not only for the above-described surface reinforcement of a roof of a concrete structure but also for various other purposes and can achieve various other effects. Specifically, for example, the structure protection sheet can be attached to a metal roof such as a corrugated metal roof to offer metal corrosion protection.

The structure protection sheet according to the present invention may be modified by adding polyrotaxane, or the surface strength of the structure protection sheet may be increased by adding a resin composition or resin particles.

[Method for Using Structure Protection Sheet]

A method for using a structure protection sheet according to the present invention is a method in which the above-described structure protection sheet 1 according to the present invention is used as shown in FIG 2. The method includes attaching the structure protection sheet 1 to the surface of the structure's roof 21 via the bonding layer 5. In the case where the release film 6 is located on the surface of the bonding layer 5, the release film 6 is separated to uncover the bonding layer 5 as shown in FIG 2A, and then the structure protection sheet 1 is attached to the structure's roof 21 as shown in FIG 2B, with the bonding layer 5 in contact with the structure's roof 21.

In this method, the structure protection sheet 1 can be easily attached to the surface of the structure's roof 21. Thus, the structure protection sheet 1 made up of layers with a small thickness variation can be placed on the structure's roof 21 even by a worker who is not well-trained. This allows for significant shortening of the work period and makes it possible to reduce the temperature rise of the structure's roof 21 and protect the structure's roof 21 over a long period of time.

In the case where the structure's roof 21 has already suffered from a defect such as a crack, the defective part is repaired first, and then the structure protection sheet 1 is attached by the method as described above. This can extend the service life of the concrete structure's roof 21.

A primer layer containing a hardenable resin material may be formed on the surface of the structure's roof 21.

The hardenable resin material is not limited to a particular type and may be any material that hardens into a resin through thermal hardening, photohardening, or any other process. Preferred examples of the hardenable resin material include epoxy compounds. When the hardenable resin material is an epoxy compound, a hardened primer layer resulting from hardening of the primer layer is an epoxy hardened material. The epoxy hardened material is typically produced by hardening an epoxy compound having two or more epoxy groups by means of a hardener. The following will describe an example where such an epoxy hardened material is used as the primer layer.

Examples of the epoxy compound include bisphenol A epoxy resins, bisphenol F epoxy resins, bisphenol S epoxy resins, o-cresol novolac epoxy resins, alicyclic epoxy resins, aliphatic epoxy resins, diglycidyl ethers of phenols, and diglycidyl ethers of alcohols.

Examples of the hardener include polyfunctional phenols, amines, polyamines, mercaptans, imidazoles, acid anhydrides, and phosphorus-containing compounds. Examples of the polyfunctional phenols include: monocyclic difunctional phenols such as hydroquinone, resorcinol, and catechol; polycyclic difunctional phenols such as bisphenol A, bisphenol F, naphthalene diols, and biphenols; halides of the monocyclic or polycyclic difunctional phenols; and the monocyclic or polycyclic difunctional phenols substituted with an alkyl group. Novolacs or resols which are polycondensation products of the above phenols and aldehydes can also be used. Examples of the amines include aliphatic or aromatic primary, secondary, and tertiary amines, quaternary ammonium salts, alicyclic amines, guanidines, and urea derivatives.

The material (including the hardenable resin material) of the primer layer may be a combination of the compounds mentioned above as examples and may be an epoxy resin primer containing, for example, a bisphenol A or bisphenol F epoxy as a main component and a polyamine or mercaptan as a hardener. The epoxy resin primer may contain, for example, a coupling agent, a viscosity modifier, a hardening accelerator etc. in addition to the main component and the hardener. Such a primer used to form the primer layer may be, for example, a two-part reaction-hardenable aqueous epoxy resin emulsion manufactured by TOAGOSEI Co., Ltd. under the trade name "Aron Bullcoat P-300" ("Aron Bullcoat" is the registered trademark of TOAGOSEI Co., Ltd.).

The primer layer is typically used as an undercoat material for the structure's roof 21. The primer layer may be formed by applying an undercoat material such as a solvent-based epoxy resin solution, an epoxy resin emulsion, another common emulsion, or a pressure-sensitive adhesive to the surface of the structure's roof 21. In this case, the application of the undercoat material can be accomplished by a common method. For example, the undercoat material is applied to the surface of the structure's roof 21, which is to be prevented from deterioration, by means such as a brush or roller or by a common technique such as spraying with a spray gun, and thus a layer of the undercoat material is formed on the surface of the structure's roof 21.

The thickness of the primer layer is not limited to a particular value. Preferably, the thickness of the primer layer in a wet state is in the range of 50 to 300 μm. When the thickness of the wet primer layer is 50 μm or more, the final thickness of the primer layer can be easily made uniform in view of infiltration of the material of the primer layer into the roof 21 of a structure such as a concrete structure, and satisfactory adhesive performance between the structure's roof and the structure protection sheet 1 can be easily ensured. The upper limit of the thickness of the primer layer is not limited to a particular value. In order to improve the ease of application, minimize misalignment between the layers to be bonded together, and optimize the amount of the material used, the thickness of the primer layer is preferably 300 $\mu$m or less. The primer layer formed as an undercoat layer on the structure's roof 21 acts to enhance the adhesion between the structure's roof 21 and the structure protection sheet 1. When the thickness of the primer layer is in the above range, the structure protection sheet 1 is more likely to reinforce and protect the structure's roof 21 reliably over a long period of time.

In the case where the structure's roof 21 has a crack or any other defect, it is preferable to repair the crack or defect before application of the primer layer and then form the primer layer. The method for the repair is not limited to using particular means, and the repair is usually done using a material such as cement mortar or an epoxy resin.

## Examples

The present invention will be descried in more detail by Examples and Reference Examples.

(Example 1)

PP-laminated paper with a thickness of 130 $\mu$m was used as a release sheet. A black-colored aqueous one-part acrylic-silicone emulsion containing a highly near-infrared-reflective pigment was applied onto the release sheet and dried to form a single-layered thermal barrier resin layer 3 with a thickness of 120 $\mu$m. After that, a composition for polymer-cement hardened layer formation was applied onto the thermal barrier resin layer 3 and dried to form a polymer-cement hardened layer 2 with a thickness of 300 $\mu$m.

A pressure-sensitive adhesive liquid mixture having a gel fraction of 40 to 60% was prepared by mixing 100 parts by mass of an acrylic pressure-sensitive adhesive (ORIBAIN™ 6574 manufactured by Toyochem Co., Ltd.) with 6 parts by mass of an isocyanate hardener (BHS 8515 manufactured by Toyochem Co., Ltd.). The pressure-sensitive adhesive liquid mixture was applied onto the side of the polymer-cement hardened layer 2 opposite from the thermal barrier resin layer 3 and dried to form a bonding layer 5 (pressure-sensitive adhesive layer) with a thickness of 200 $\mu$m. The resulting structure protection sheet had a total thickness of 620 $\mu$m.

The composition for polymer-cement hardened layer formation was an aqueous acrylic emulsion containing 45 parts by mass of a cement mixture. The cement mixture contained, at least, 70 $\pm$ 5 parts by mass of Portland cement, 10 $\pm$ 5 parts by mass of silicon dioxide, 2 $\pm$ 1 parts by mass of aluminum oxide, and 1 to 2 parts by mass of titanium oxide. The acrylic emulsion was prepared by emulsion polymerization of an acrylic acid ester monomer by means of an emulsifier and contained, at least, 53 $\pm$ 2 parts by mass of an acrylic acid polymer and 43 $\pm$ 2 parts by mass of water. The polymer-cement hardened layer 2, which was obtained by applying and drying the composition for polymer-cement hardened layer formation which was a mixture of the cement mixture and the acrylic emulsion, was a composite layer composed of an acrylic resin and 50% by mass of Portland cement contained in the acrylic resin.

(Examples 2 to 6 and Reference Examples 1 and 2)

Structure protection sheets according to Examples 2 to 6 and Reference Examples 1 and 2 were produced in the same manner as the structure protection sheet of Example 1, except for using the following emulsions instead of the black-colored aqueous one-part acrylic-silicone emulsion containing a highly near-infrared-reflective pigment: a black-colored aqueous one-part silicone emulsion containing a highly near-infrared-reflective pigment (Example 2); a white-colored aqueous one-part acrylic-silicone emulsion containing a highly near-infrared-reflective pigment (Example 3); a white-colored, weak solvent-based one-part acrylic emulsion containing a highly near-infrared-reflective pigment (Example 4); a white-colored, weak solvent-based two-part acrylic emulsion containing a highly near-infrared-reflective pigment (Example 5); a white-colored aqueous one-part acrylic emulsion containing a highly near-infrared-reflective pigment (Example 6); a colored aqueous one-part acrylic-silicone emulsion (Reference Example 1); and a white-colored aqueous one-part acrylic emulsion (Reference Example 2).

(Measurement of Temperature Rise $\Delta t$)

Each of the structure protection sheets obtained in Examples and Reference Examples was cut into a 50 $\times$ 50 mm-sized piece, which was attached to the surface of a 50 $\times$ 50 mm-sized Galvalume™ steel sheet (manufactured by Q-ho Metal Works). A type K thermocouple (manufactured by FUSO) was secured to the side of the Galvalume™ steel sheet opposite from the structure protection sheet by means of a cellophane tape, and a 100 W reflector lamp (manufactured by YAZAWA Corporation) was placed above the structure protection sheet at a distance of 40 cm from the side of the structure protection sheet opposite from the Galvalume™ steel sheet. The Galvalume™ steel sheet, the structure protection sheet, and the lamp were surrounded by plastic corrugated cardboards to create a closed environment. In the closed environment, the lamp was lit to illuminate the surface of the structure protection sheet for 15 minutes, and the temperature rise ∆t (°C) of the surface of the Galvalume™ steel sheet was measured by the type K thermocouple. The reason for using the Galvalume™ steel sheet as a heat ray absorber in this test is that the Galvalume™ steel sheet more readily undergoes a temperature change than slate materials.

As seen from Table 1, the rise ∆t of the surface temperature of the Galvalume™ steel sheet to which any of the structure protection sheets according to Examples was attached and the lightness L* of reflected light as described below satisfied the inequalities (1), (2), and (3) listed previously.

(Measurement of Lightness L* of Reflected Light)

Each of the structure protection sheets obtained in Examples and Reference Examples was cut into a 50 × 50 mm-sized piece, which was attached to the surface of a 50 × 50 mm-sized Galvalume™ steel sheet (manufactured by Q-ho Metal Works). The lightness L* of reflected light from the surface of the structure protection sheet was measured by means of ultraviolet-visible-near-infrared spectrophotometer V-770 (manufactured by JASCO Corporation). The measurement conditions were as listed below.

| | |
|---|---|
| UV/vis bandwidth | 5.0 nm |
| NIR bandwidth | 20.0 nm |
| UV/vis response | 0.24 sec |
| NIR bandwidth | 0.24 sec |
| Starting wavelength | 2500 nm |

| | |
|---|---|
| Ending wavelength | 300 nm |
| Data acquisition interval | 1.0 nm |
| Scanning mode | Continuous scanning |
| Scanning speed | 1000 nm/min |
| The number of repetitions | Once |

[Table 1]

| | Lightness L* | Temperature rise ∆t (°C) | $-0.0769(L*) + 11.982$ |
|---|---|---|---|
| Ex. 1 | 21.2 | 5.90 | 10.35 |
| Ex. 2 | 21.3 | 5.43 | 10.34 |
| Ex. 3 | 98.7 | 3.87 | 4.39 |
| Ex. 4 | 93.5 | 3.90 | 4.79 |
| Ex. 5 | 98.9 | 3.73 | 4.38 |
| Ex. 6 | 97.4 | 3.17 | 4.49 |
| Ref. 1 | 70.4 | 6.57 | 6.57 |
| Ref. 2 | 96.4 | 4.57 | 4.57 |

**Reference Signs List**

| | |
|---|---|
| 1 | structure protection sheet |
| 2 | polymer-cement hardened layer |
| 3 | thermal barrier resin layer |
| 4 | release sheet |
| 5 | bonding layer |
| 6 | release film |
| 7 | mesh layer |

| 21, 30 | roof |
| 31 | blue sheet |
| 32 | sandbag |

## Claims

1. A structure protection sheet to be attached to a surface of a roof of a structure, the structure protection sheet comprising, in order:

   a bonding layer;
   a polymer-cement hardened layer; and
   a thermal barrier resin layer.

2. The structure protection sheet according to claim 1, wherein the thermal barrier resin layer comprises an inorganic thermal barrier pigment and/or an organic thermal barrier pigment.

3. The structure protection sheet according to claim 1 or 2, wherein a lightness L* of reflected light from a surface of the thermal barrier resin layer and a temperature rise $\Delta t$ (°C) of the roof of the structure in a region to which the structure protection sheet is attached satisfy the following inequalities (1), (2), and (3):

$$\Delta t < -0.0769(L^*) + 11.982 \qquad (1);$$

$$0 < L^* < 100 \qquad (2);$$

and

$$0 < \Delta t < 9 \qquad (3).$$

4. The structure protection sheet according to claim 1, 2, or 3, wherein the bonding layer comprises an acrylic pressure-sensitive adhesive.

5. The structure protection sheet according to claim 1, 2, 3, or 4, wherein

   the polymer-cement hardened layer comprises a cement component and a resin, and
   a content of the resin in the polymer-cement hardened layer is from 10 to 40% by weight.

6. The structure protection sheet according to claim 1, 2, 3, 4, or 5, further comprising a mesh layer or a non-woven fabric layer.

7. A method for using the structure protection sheet according to claim 1, 2, 3, 4, 5, or 6, the method comprising:
   attaching the structure protection sheet to a surface of a roof of a structure via the bonding layer.

FIG. 1A

FIG. 1B

FIG. 2A

FIG. 2B

FIG. 3A

FIG. 3B

FIG. 4A

FIG. 4B

FIG. 5

| | INTERNATIONAL SEARCH REPORT | International application No. |
|---|---|---|
| | | **PCT/JP2022/021967** |

**A. CLASSIFICATION OF SUBJECT MATTER**

*B32B 13/12*(2006.01)i; *B32B 27/00*(2006.01)i; *B32B 27/06*(2006.01)i; *B32B 27/30*(2006.01)i; *E04G 21/24*(2006.01)i;
*E04G 21/28*(2006.01)i; *E04G 21/30*(2006.01)i; *E04B 1/76*(2006.01)i; *E04B 1/80*(2006.01)i
FI: E04G21/30 A; E04B1/76 500K; E04B1/80 100N; E04B1/80 100P; E04G21/24 A; E04G21/28 B; B32B13/12;
B32B27/06; B32B27/00 M; B32B27/30 A

According to International Patent Classification (IPC) or to both national classification and IPC

**B. FIELDS SEARCHED**

Minimum documentation searched (classification system followed by classification symbols)

B32B13/12; B32B27/00; B32B27/06; B32B27/30; E04G21/24; E04G21/28; E04G21/30; E04B1/76; E04B1/80

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2004-27718 A (SHO BOND CONSTR CO LTD, FUJIMORI KOGYO CO LTD) 29 January 2004 (2004-01-29)<br>paragraphs [0015]-[0043], fig. 1-2 | 1-7 |
| Y | WO 2021/010456 A1 (KEIWA INCORPORATED) 21 January 2021 (2021-01-21)<br>paragraphs [0038]-[0054], fig. 1-3 | 1-7 |
| Y | JP 2004-175034 A (ACHILLES CORP) 24 June 2004 (2004-06-24)<br>paragraphs [0001]-[0002], [0033], [0042]-[0057] | 1-7 |
| A | JP 2008-308980 A (SK KAKEN CO LTD) 25 December 2008 (2008-12-25)<br>entire text, all drawings | 1-7 |
| A | JP 2014-210867 A (KIKUSUI KAGAKU KOGYO KK) 13 November 2014 (2014-11-13)<br>entire text | 1-7 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **20 June 2022** | **05 July 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

Form PCT/ISA/210 (patent family annex) (January 2015)

**INTERNATIONAL SEARCH REPORT**
Information on patent family members

International application No.

**PCT/JP2022/021967**

| Patent document cited in search report | | | Publication date (day/month/year) | Patent family member(s) | | Publication date (day/month/year) |
|---|---|---|---|---|---|---|
| JP | 2004-27718 | A | 29 January 2004 | (Family: none) | | |
| WO | 2021/010456 | A1 | 21 January 2021 | TW 202110640 A paragraphs [0038]-[0054], fig. 1-3 | | |
| JP | 2004-175034 | A | 24 June 2004 | (Family: none) | | |
| JP | 2008-308980 | A | 25 December 2008 | CN 101302880 A entire text, all drawings | | |
| JP | 2014-210867 | A | 13 November 2014 | (Family: none) | | |

**EP 4 353 474 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3225057 U

- JP 3116572 U